# EUROPÄISCHE PATENTSCHRIFT

(11) **EP 1 438 230 B1**
(45) Veröffentlichungstag und Bekanntmachung des Hinweises auf die Patenterteilung: **27.04.2005**
(21) Anmeldenummer: 02774139.6
(22) Anmeldetag: 16.09.2002
(51) Int. Cl.: B64C 9/02, F16S 3/00

(54) **TRAG- BZW. FÜHRUNGSVORRICHTUNG FÜR FLUGZEUGKOMPONENTEN**
CARRYING OR GUIDING DEVICE FOR AIRCRAFT COMPONENTS
DISPOSITIF DE SUPPORT OU DE GUIDAGE DE COMPOSANTS D'AVION

(30) Priorität: 24.10.2001 AT 16902001
(43) Veröffentlichungstag der Anmeldung: 21.07.2004
(73) Patentinhaber: Fischer Advanced Composite Components AG, 4910 Ried im Innkreis (AT)
(72) Erfinder: STEPHAN, Walter, A., A-4973 St. Martin (AT); FILSEGGER, Hermann, 5163 Mattsee (AT)
(74) Vertreter: Heger, Georg, Dipl.-Ing., Dr.
(86) Internationale Anmeldenummer: PCT/AT2002/000266
(87) Internationale Veröffentlichungsnummer: WO 2003/035469

(56) Entgegenhaltungen:
- EP-A- 0 356 142
- FR-A- 2 679 866
- US-A- 5 171 510
- US-A- 5 661 945
- HOLMBERG J A: "Out-Of-Plane Strength of RTM-Laminates with Sharp Corners" PROCEEDINGS OF THE 1995 ASME INTERNATIONAL ENGINEERING CONGRESS AND EXPOSITION, Bd. 69-1, 1995, Seiten 335-344, XP008011065 NY, USA

## Beschreibung

Die Erfindung betrifft eine Trag- bzw. Führungsvorrichtung für an einem Flugzeug angeordnete Landeklappen od. dgl. mit einem Träger mit im Wesentlichen U-förmigem Profil und im Wesentlichen parallelen Seitenwänden.

Obgleich in der vorliegenden Beschreibung und den angeführten Beispielen hauptsächlich auf eine Trag- und Führungsvorrichtung für Landeklappen eingegangen wird, ist die vorliegende Erfindung beispielsweise auch als Aufhängevorrichtung für Flugzeugtriebwerke anwendbar.

Eine Trag- bzw. Führungsvorrichtung für eine Landeklappe der angegebenen Art ist beispielsweise aus der DE 41 07 556 C1 bekannt, welche einen Träger mit im Wesentlichen U-förmigem Profil aufweist, der aus Aluminiumguss besteht und zur Führung eines Wagens, der mit der Landeklappe verbunden ist, Lastschienen aufweist. Zur Gewährleistung der erforderlichen Festigkeit sind Versteifungselemente in Form eines Torsionskastens, eines Zugbands und einer Querstrebe vorgesehen. Während des Starts und während der Landung werden die Landeklappen ausgefahren, so dass ein größerer Auftrieb geschaffen wird. Naturgemäß treten dabei enorme Belastungen auf den Landeklappen und in der Folge den Trag- bzw. Führungsvorrichtungen auf, weshalb diese besonders hohe Festigkeitswerte aufweisen müssen. Die Bewegung der Landeklappe wird üblicherweise über eine im Flugzeugtragflügel verlaufende Spindel und entsprechende Getriebe auf die Landeklappen übertragen. Dabei ist an der Trag- bzw. Führungsvorrichtung ein Getriebe befestigt, welches beispielsweise über einen Hebel die Landeklappe verschiebt und verschwenkt. Dabei werden hohe Drehmomente in den Träger eingeleitet, welche dessen Struktur nicht negativ beeinflussen dürfen. Auch im Falle eines Klemmens der Landeklappe darf der Träger der Trag- bzw. Führungsvorrichtung nicht zerstört werden. Üblicherweise bestehen daher derartige Träger aus Stahl, Aluminium oder Titan mit einer entsprechenden Anzahl von Verstärkungselementen. Daraus resultiert ein relativ hohes Gewicht, welches in der Flugzeugtechnik aufgrund des resultierenden höheren Treibstoffverbrauchs vermieden werden sollte und darüber hinaus ein hoher Herstellungs- und Montageaufwand. Dadurch steigen auch die Herstellungs-, Betriebs- und Instandhaltungskosten.

Die EP 356 142 A2 betrifft einen Träger, der sich insbesondere als Flügelklappenlaufschiene eignet und aus verschiedenen miteinander verschweißten Metallblechen besteht. Dabei ist einerseits das Gewicht des Trägers und andererseits der Herstellungsaufwand relativ groß.

Die Aufgabe der vorliegenden Erfindung besteht daher in der Schaffung einer Trag- bzw. Führungsvorrichtung der angegebenen Art, welche bei gleichzeitiger Erfüllung der notwendigen Festigkeitskriterien besonders niedriges Gewicht aufweist und darüber hinaus aus möglichst wenig Einzelteilen besteht, so dass der Herstellungs- und Montageaufwand reduziert werden kann. Die Nachteile bekannter Vorrichtungen sollen vermieden oder reduziert werden.

Gelöst wird die erfindungsgemäße Aufgabe durch die kennzeichnende Merkmale von Anspruch 1 Durch die Verwendung eines faserverstärkten Kunststoffs für den Träger und die Elemente zur Verbindung mit anderen Bauelementen kann einerseits ein niedriges Gewicht erzielt werden und andererseits die Anzahl der Einzelteile der Trag- bzw. Führungsvorrichtung durch die integrale Bauweise bei der Verwendung von Kunststoff reduziert werden. Neben Kohlenstofffasern zur Verstärkung des Kunststoffs sind auch Glasfasern oder Aramidfasern verwendbar, wobei Kohlenstofffasern hinsichtlich ihrer Steifigkeit und Festigkeit sowie ihrer besseren Bearbeitbarkeit Vorteile aufweisen. Die Herstellung des Trägers aus faserverstärktem Kunststoff kann in bekannter Weise durch Anordnung von in Harz getränkten Gewebelagen, sog. Prepregs, auf einer Form und Aushärtung der Anordnung in einem Autoklaven unter Wärme und Druck erfolgen. Durch die Anordnung der Abdeckplatte an der im Wesentlichen gesamten offenen Seite des Trägers wird die Steifigkeit des Trägers erhöht.

Gemäß einem weiteren Merkmal der Erfindung ist vorgesehen, dass an den Enden der Seitenwände des Trägers abstehende Laschen angeordnet sind. Diese vorzugsweise in einem Arbeitsgang mit dem Träger hergestellten Laschen geben dem Träger einerseits eine höhere Festigkeit und bieten andererseits eine Befestigungsmöglichkeit für anzuschließende Bauelemente. Bei einer solchen Anordnung von Laschen am Träger kann die Abdeckplatte einfach durch einen ebenen Bauteil gebildet werden, der über die Laschen mit dem Träger verbunden beispielsweise verklebt und/oder vernietet wird.

Zur Erhöhung der Festigkeit des Trägers können an den Seitenwänden Versteifungsstrukturen, beispielsweise in Form von Profilen mit Z-förmigem, U-förmigem oder I-förmigem Querschnitt oder auch Hutprofilen angeordnet sein.

Zur weiteren Erhöhung der Festigkeit des Trägers können die Verbindungselemente zwischen den Seitenwänden angeordnet sein, welche vorzugsweise durch rohrförmige Elemente gebildet sein können. Derartige rohrförmige Elemente weisen relativ niedriges Gewicht auf und verleihen der Anordnung eine hohe Festigkeit, indem auf einer Seitenwand eingeleitete Momente oder auftretende Schubkräfte über die Verbindungselemente in die andere Seitenwand geleitet werden oder beidseitig auftretende Momente oder Schubkräfte ins Innere der Verbindungselemente geleitet werden.

Zur einfacheren Befestigung der Verbindungselemente zwischen den Seitenwänden des Trägers können diese mit seitlichen flanschförmigen Erweiterungen ausgebildet sein, die eine größere Klebefläche bzw. Angriffsfläche für Verbindungselemente wie z.B. Nieten oder Schrauben bieten.

Um das Gewicht der Trag- bzw. Führungsvorrichtung weiter zu reduzieren und auch einen Durchgang durch die Vorrichtung zu ermöglichen, weisen die Seitenwände des Trägers gemäß einem weiteren Merkmal der Erfindung entsprechend den rohrförmigen Verbindungselementen Öffnungen auf. Diese Öffnungen verringern die Festigkeit der Anordnung kaum und ermöglichen beispielsweise den Durchtritt von Leitungen oder auch die Anordnung eines Getriebeteils zur Einleitung der Bewegung einer Landeklappe.

Die Versteifungsstrukturen und/oder Verbindungselemente und/oder Abdeckplatte sind mit dem Träger vorzugsweise über Klebeverbindungen miteinander verbunden, wobei insbesondere Heißklebeverbindungen bevorzugt werden.

Um eine entsprechende Dauerfestigkeit zu erreichen, können zusätzlich zu den Klebeverbindungen auch Verbindungselemente, wie z.B. Nieten, Schrauben oder dergl. vorgesehen sein. Allerdings sind aufgrund der vorhandenen Klebeverbindungen diese Verbindungselemente in gegenüber bekannten Vorrichtungen deutlich reduzierter Anzahl erforderlich, wodurch wiederum Gewicht aber auch Herstellungs- und Montagekosten eingespart werden können. Üblicherweise werden sog. Schraubnieten als Verbindungselemente in der Flugzeugtechnik eingesetzt. Derartige Schraubnieten erfordern beim Anwenden eine geringe Vorspannkraft und sind hauptsächlich auf Schub und nicht auf Zug belastet.

Um eine zusätzliche Verbindung mit Nieten oder Schrauben oder dergl. rascher durchführen zu können, weisen der Träger und/oder Versteifungsstrukturen und/oder Verbindungselemente und/oder die Abdeckplatte an den Stellen der zusätzlichen Verbindungselemente Löcher auf, durch die die entsprechenden Verbindungselemente wie z.B. Nieten oder Schrauben oder dergl. gesteckt werden können. Dadurch kann der Montageaufwand deutlich reduziert werden.

Zur lokalen Erhöhung der Festigkeitseigenschaften kann der Träger an Verbindungsstellen mit den Versteifungsstrukturen und/oder Verbindungselementen und/oder der Abdeckplatte aber auch an Verbindungsstellen mit anderen Bauteilen Verdickungen aufweisen. Durch diese Verdickungen werden Einrisse im Träger durch zu hohe Beanspruchungen vermieden. Die Dimensionen und Geometrien derartiger Verdickungen werden an die entsprechenden Erfordernisse angepasst.

Wenn am Träger Befestigungs- oder Adapterelemente oder dergl., insbesondere aus Metall, angeordnet sind, können einerseits die Verbindungen des Trägers mit Strukturelementen des Flugzeugs und andererseits die Verbindungen mit den zu tragenden bzw. führenden Flugzeugkomponenten realisiert werden. Beispielsweise ist im Falle einer Trag- und Führungsvorrichtung für eine Landeklappe eines Flugzeugs am Träger eine Führungsschiene aus Metall angeordnet, an welcher der mit der Landeklappe verbundene Wagen während des Ein- und Ausfahrens der Landeklappe abrollt. Darüber hinaus sind Befestigungselemente aus Metall zur Montage des Getriebes, zum Verstellen der Landeklappe oder zur Verbindung des Trägers mit dem Flugzeugtragflügel erforderlich.

Diese Befestigungselemente können über entsprechende Gegenstücke mit dem Träger, beispielsweise über Nietverbindungen, verbunden werden.

Vorteilhafterweise sind neben dem Träger auch die Abdeckplatte und/oder allfällige Versteifungsstrukturen und/oder allfällige Verbindungselemente aus faserverstärktem Kunststoff, insbesondere kohlenstofffaserverstärktem Kunststoff, hergestellt. Dadurch können die Vorteile hinsichtlich Gewicht und Herstellung der erfindungsgemäßen Trag- bzw. Führungsvorrichtung noch mehr unterstrichen werden.

Neben der Herstellung der Bauteile aus Kunststoff können der Träger sowie allfällige Versteifungsstrukturen, Verbindungselemente sowie die Abdeckplatte, auch aus Kunststoffmaterial nach der sog. Resin Transfer Moulding-Methode hergestellt werden. Durch dieses Herstellungsverfahren ist die Bildung komplizierter dreidimensionaler Bauteile mit speziellen Eigenschaften möglich. Die Resin Transfer Moulding-Technologie bringt gegenüber herkömmlichen Herstellungsmethoden unter Verwendung eines Autoklaven, in dem das Prepreg-Material ausgehärtet wird, Vorteile.

Zur Erzielung weiterer Vorteile hinsichtlich Gewicht und Festigkeit kann der Träger sowie allfällige Versteifungsstrukturen Verbindungselemente sowie die Abdeckplatte Carbongewebe zur Verstärkung enthalten.

Wenn in Carbongewebe reaktive Materialien, wie z.B. Nylon, eingenäht oder eingewebt werden, können bestimmte Eigenschaften wie Festigkeit oder Schlagzähigkeit erhöht werden. Beispielsweise kann das verwendete Carbongewebe mit Nylon verwebt werden und nach Zugabe des Harzes während des Resin Transfer Moulding-Verfahrens das Nylonmaterial aufgelöst werden, wodurch die Schlagzähigkeit erhöht wird.

Die Erfindung wird nachstehend anhand eines Ausführungsbeispiels unter Bezugnahme auf die Zeichnungen noch weiter erläutert.

Darin zeigen:
Fig. 1 eine perspektivische Ansicht einer Trag- bzw. Führungsvorrichtung für eine Landeklappe eines Flugzeugs;
Fig. 2 eine perspektivische Explosionsdarstellung des erfindungsgemäßen Trägers;
Fig. 3 eine perspektivische Ansicht des Trägers mit den zwischen den Seitenwänden angeordneten Verbindungselementen; Fig.4 eine perspektivische Ansicht eines rohrförmigen Verbindungselements; und
Fig. 5 eine weitere perspektivische Ansicht des Trägers gemäß Fig. 2 von hinten.

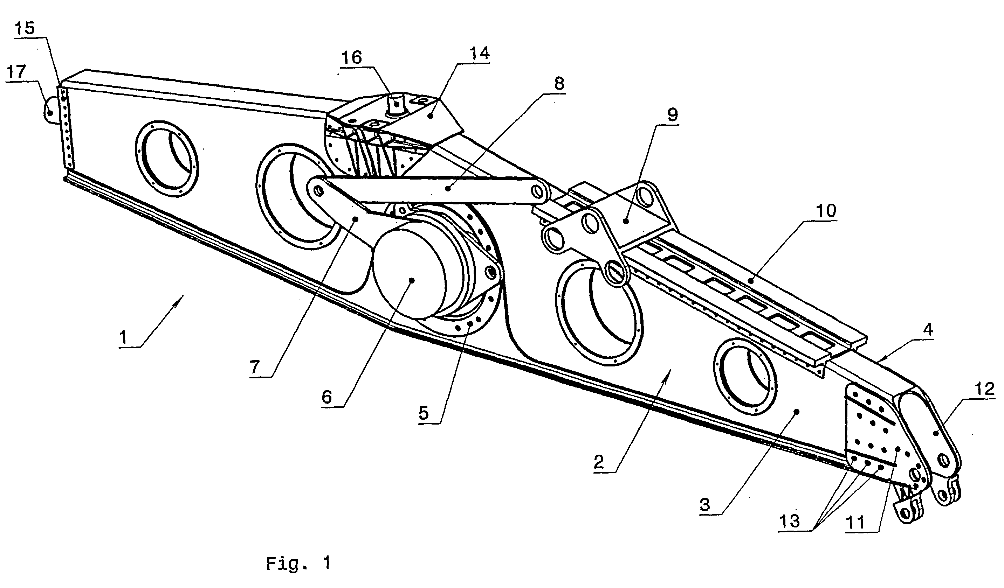

Fig. 1 zeigt eine perspektivische Ansicht einer Trag- bzw. Führungsvorrichtung 1 für an einem Flugzeug-Tragflügel angeordnete Landeklappen (nicht dargestellt) bestehend aus einem Träger 2 der im Wesentlichen U-förmiges Profil aufweist und bei dem die Seitenwände 3,4 im Wesentlichen parallel zueinander angeordnet sind. Gemäß dem Stand der Technik besteht ein derartiger Träger 2 aus Metall, beispielsweise aus Stahl oder Aluminium-Titan-Legierungen. Erfindungsgemäß ist der Träger 2 aus faserverstärktem Kunststoff, insbesondere kohlenstofffaserverstärktem Kunststoff, hergestellt. An einer Seitenwand 3 des Trägers 2 ist beispielsweise über einem Adapterring 5 ein Getriebe 6 angeordnet, das über entsprechende Hebel 7, 8 die damit verbundene Landeklappe (nicht dargestellt) bewegen kann. Mit der Landeklappe verbunden ist ein Wagen 9, der an einer mit dem Träger 2 verbundenen Führungsschiene 10 während des Ein- und Ausfahrens der Landeklappe abrollt. Nach dem Ausfahren der Landeklappe erfolgt eine steile Kippbewegung nach unten, welche durch ein mit dem Ende des Trägers 2 verbundenes Lenkerelement (nicht dargestellt) unterstützt wird. Zur Befestigung eines solchen Lenkerelements können am Ende des Trägers 2 weitere Befestigungselemente 11, 12 angeordnet sein. Diese Befestigungselemente können mit dem Träger 2 verklebt werden und zusätzlich zur Erhöhung der Sicherheit auch über Nieten 13 oder dergl. verbunden sein. Zur Lagerung des Trägers 2, beispielsweise an einem Flugzeug-Tragflügel, dienen weitere Befestigungsplatten 14, 15 sowie allfällige Zentrierbolzen 16, 17. Bei Verwendung der erfindungsgemäßen Trag- bzw. Führungsvorrichtung 1 zur Aufhängung eines Triebwerks an einem Flugzeug-Tragflügel werden das Getriebe 6 die Hebel 7, 8, der Wagen 9 sowie die Führungsschiene 10 natürlich nicht benötigt und die Befestigungselemente 11, 12, 14, 15 sowie allfällige Zentrierbolzen 16, 17 anders gestaltet sein.

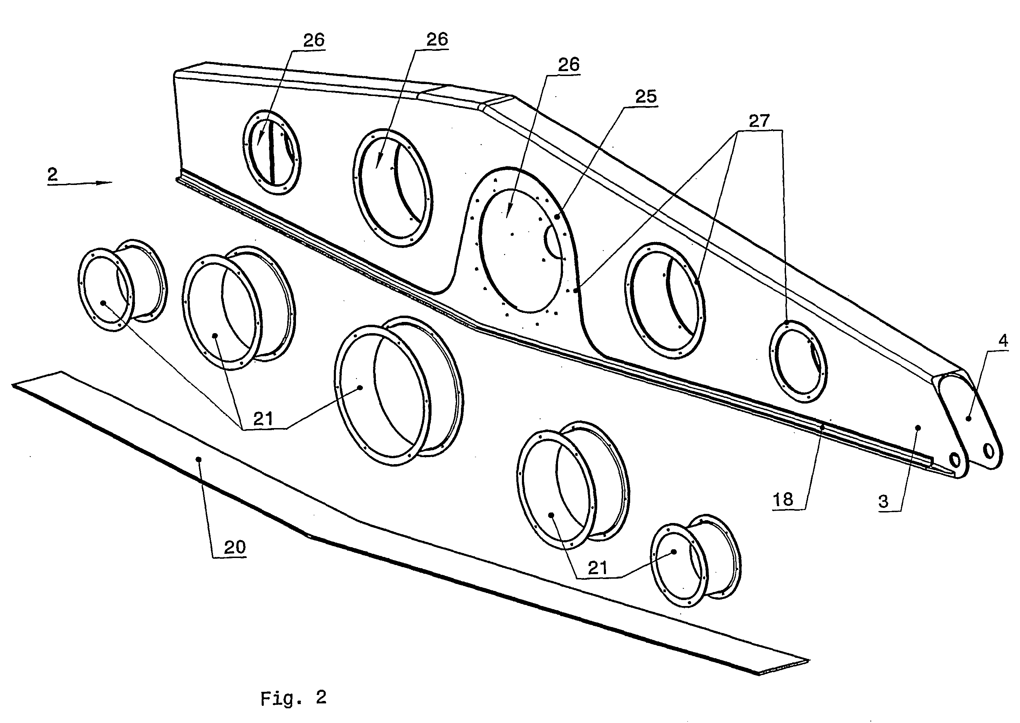

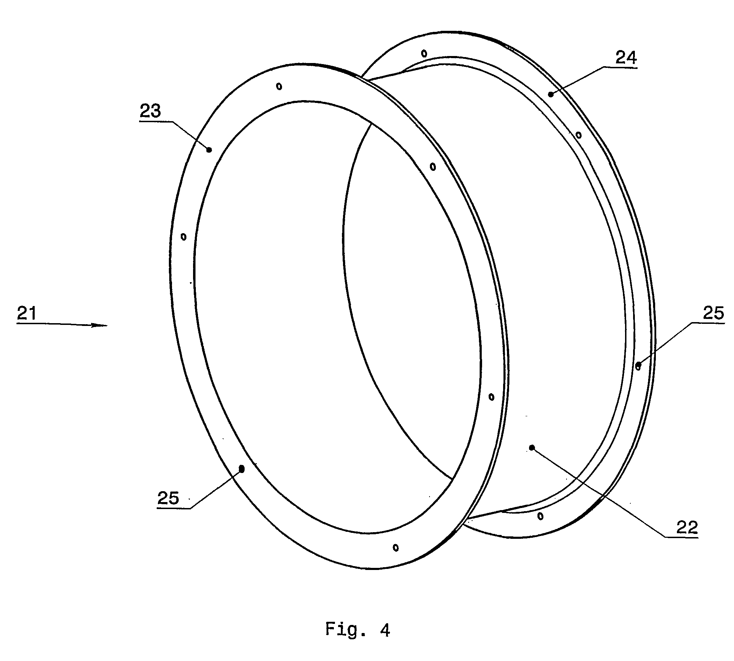

Fig. 2 zeigt eine perspektivische Explosionsdarstellung einer Ausführungsform eines erfindungsgemäßen Trägers 2, der im Wesentlichen U-förmiges Profil und im Wesentlichen parallele Seitenwände 3, 4 aufweist. An den Enden der Seitenwände 3, 4 des Trägers 2 sind beidseitig abstehende Laschen 18, 19 angeordnet, welche einerseits die Steifigkeit des Trägers 2, erhöhen und andererseits die Verbindung mit anderen Bauelementen erleichtern. Zur Erhöhung der Steifheit des Trägers 2 wird an der offenen Seite des Trägers 2 eine Abdeckplatte 20 angeordnet. Die Abdeckplatte 20 ist im einfachsten Fall eben oder entsprechend der Form des Trägers 2 mit einem Knick ausgeführt und wird über die Laschen 18, 19 mit dem Träger 2 verbunden, vorzugsweise verklebt. Zusätzlich zur Verklebung kann zur Erzielung einer Dauerhaftigkeit der Verbindung noch eine bestimmte Anzahl von Verbindungselementen in Form von Nieten oder Schrauben angeordnet sein, wobei die dafür notwendigen Löcher vorzugsweise bereits vor der Montage angefertigt werden. Zur weiteren Versteifung des Trägers 2 können an den Seitenwänden 3, 4 Versteifungsstrukturen in Form von Profilen, vorzugsweise an der Innenseite der Seitenwände 3, 4, angeordnet sein (nicht gezeigt). Zusätzlich können zur Übertragung von Momenten und Schubkräften von einer Seitenwand 3, 4 zur anderen Seitenwand 4, 3 des Trägers 2 zwischen den Seitenwänden 3, 4 Verbindungselemente 21 angeordnet sein, welche vorzugsweise ebenso wie der Träger 2 und die Abdeckplatte 20 aus faserverstärktem Kunststoff, insbesondere kohlenstofffaserverstärktem Kunststoff (CFK), hergestellt sind. Zur Minimierung des Gewichts sind die Verbindungselemente 21 vorzugsweise durch rohrförmige Elemente 22 gebildet, welche zur besseren Montage mit seitlichen flanschförmigen Erweiterungen 23, 24 versehen sein können (s. Fig. 4). In den flanschförmigen Erweiterungen 23, 24 können allfällige Löcher 25 zur Anordnung von Verbindungselementen wie Nieten oder Schrauben vorgesehen sein. vorzugsweise werden die Verbindungselemente 21 durch Klebeverbindungen mit den Seitenwänden 3, 4 des Trägers 2 verbunden. Zusätzlich können zur Erhöhung der Sicherheit jedoch Schraub- oder Nietverbindungen vorgesehen werden.

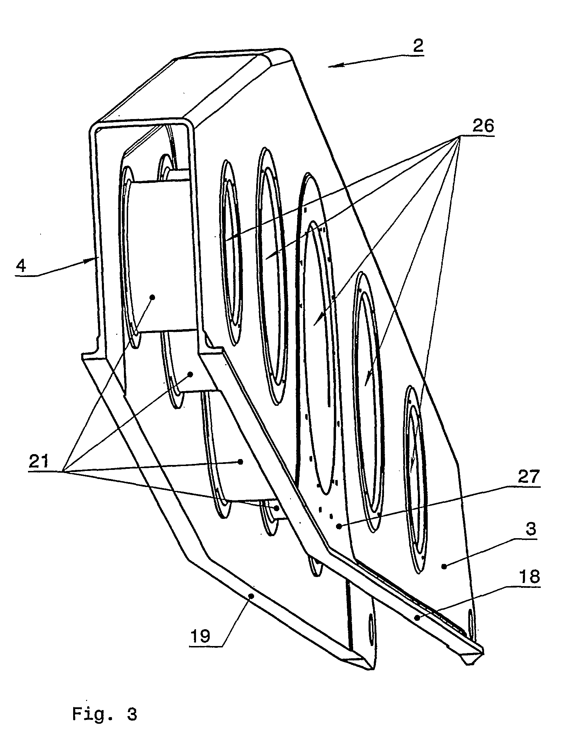

Fig. 3 zeigt eine perspektivische Ansicht des Trägers 2 mit den zwischen den Seitenwänden 3, 4 angeordneten Verbindungselementen 21 von unten. Die über die Laschen 18, 19 zu befestigende Abdeckplatte 20 ist nicht eingezeichnet. Über die Verbindungselemente 21 werden Drehmomente und Schubkräfte von einer Seitenwand 3 in die andere Seitenwand 4 abgeleitet oder Drehmomente oder Schubkräfte der Seitenwände 3, 4 vernichtet. Der Träger 2 weist entsprechend den rohrförmigen Verbindungselementen 21 an den Seitenwänden 3, 4 Öffnungen 26 auf, durch welche einerseits eine Gewichtseinsparung erzielt werden kann und andererseits auch der Durchtritt von Kabeln oder Leitungen oder die Anordnung von Bauteil-Komponenten ermöglicht wird. Beispielsweise wird in der mittleren Öffnung 26 in den Seitenwänden 3, 4 des Trägers 2 im Falle einer Trag- bzw. Führungsvorrichtung 1 für Landeklappen das Getriebe 6 zum Ein- und Ausfahren der Landeklappen angeordnet.

Der Träger 2 kann an Verbindungsstellen mit den Versteifungsstrukturen und/oder Verbindungselementen 21 und/oder der Abdeckplatte 20 oder auch an Verbindungsstellen mit anderen Bauteilen wie z.B. der Führungsplatte 10 Verdickungen 27 aufweisen, welche im Falle der Herstellung des Trägers 2 mit Harz-getränkten Gewebelagen durch Anordnung zusätzlicher Gewebelagen realisiert werden können.

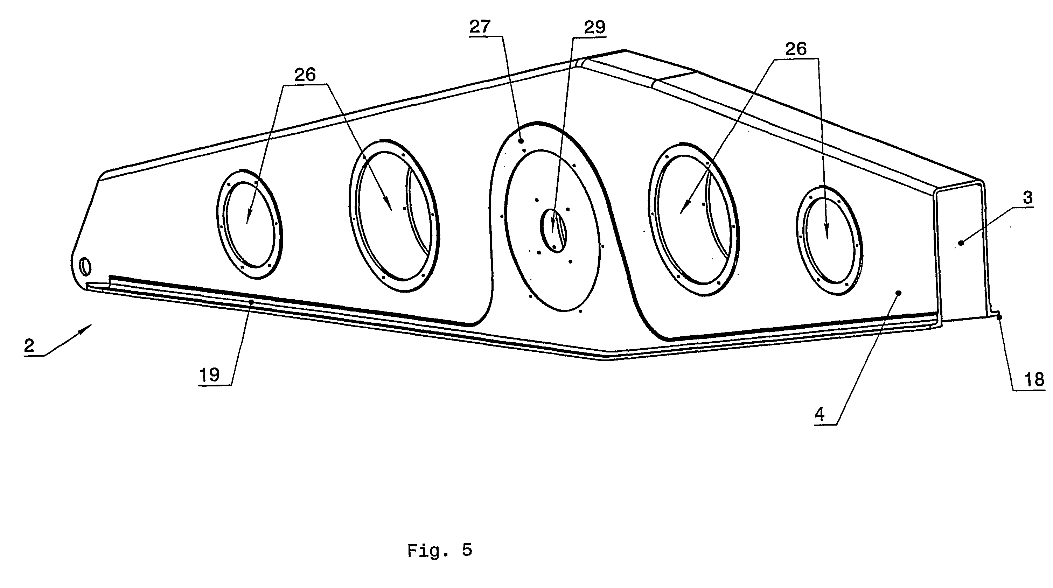

Schließlich zeigt Fig. 5 eine perspektivische Ansicht des Trägers 2 von hinten in Bezug auf Fig. 2. Auffällig dabei ist, dass die Öffnung 29 in der Mitte der Seitenwand 4 geringeren Durchmesser wie die Öffnungen 26 in der Mitte der Seitenwand 3 aufweist. Dies dient im Falle eines Trägers 2 für eine Landeklappe zur Aufnahme eines sog. Drehmoments-Begrenzers, der das auf die Landeklappe ausgeübte Drehmoment zur Verhinderung einer Zerstörung des Trägers 2 begrenzt.

Durch die erfindungsgemäße Herstellung des Trägers 2, vorzugsweise zusammen mit allen Verbindungselementen 21 sowie der Abdeckplatte 20 aus faserverstärktem Kunststoff, wird eine Konstruktion mit geringem Gewicht erreicht. Weiters kann durch die in der Kunststofftechnik üblichen Herstellungsverfahren eine integrale Bauweise erfolgen und die Anzahl der Einzelbestandteile weitgehend reduziert werden, so dass der Herstellungsaufwand sowie der Montageaufwand deutlich reduziert werden kann. Neben den herkömmlichen Herstellungsverfahren unter Verwendung eines Autoklaven können einzelne Bestandteile der erfindungsgemäßen Trag- bzw. Führungsvorrichtung auch nach der Resin Transfer Moulding (RTM)-Methode hergestellt werden, bei der trockene Fasern in eine dem herzustellenden Gegenstand entsprechende Form eingebracht werden und flüssiges Harz mit relativ niedriger Viskosität in die Form eingebracht wird. Anschließend wird die Form erwärmt, um die Viskosität des Harzes weiter herabzusetzen und einen ungestörten Fluss des Harzes in die Form zu gewährleisten. Danach härtet das Harz aus. Nach dem RTM-Verfahren können komplizierte Gegenstände leicht, rasch und relativ kostengünstig hergestellt werden. Allfällige mit dem Gewebe vernähte oder verwobene reaktive Materialien können leicht in die Form eingebracht werden und beim Einbringen des Harzes bestimmte Eigenschaften entwickeln.

Die Form der erfindungsgemäßen Trag- bzw. Führungsvorrichtung kann den jeweiligen Bedingungen beliebig angepasst werden und ist nicht auf die dargestellte Form beschränkt.

## Patentansprüche

1. Trag- bzw. Führungsvorrichtung (1) für an einem Flugzeug angeordnete Landeklappen od. dgl. mit einem Träger (2) mit im Wesentlichen U-förmigem Profil und im Wesentlichen parallelen Seitenwänden (3, 4), **dadurch gekennzeichnet, dass** der Träger (2) aus faserverstärktem Kunststoff, insbesondere kohlenstofffaserverstärktem Kunststoff (CFK), hergestellt ist, und dass die Vorrichtung (1) eine Abdeckplatte (20) einschließt, die an der im Wesentlichen gesamten offenen Seite des Trägers (2) eine Abdeckplatte (20) angeordnet, und Elemente (21) zur Verbindung mit anderen Bauelementen, wobei diese Verbindungselemente (21) aus faserverstärktem Kunststoff, insbesondere kohlenstofffaserverstärktem Kunststoff (CFK), hergestellt sind.

2. Vorrichtung (1) nach Anspruch 1, **dadurch gekennzeichnet, dass** diese Vorrichtung (1) auch an den Enden der Seitenwände (3,4) des Trägers (2) angeordnete abstehende Laschen (18, 19) einschließt.

3. Vorrichtung (1) nach Anspruch 1 oder 2, **dadurch gekennzeichnet, dass** diese Vorrichtung (1) auch an den Seitenwänden (3,4) des Trägers (2) angeordnete Versteifungsstrukturen einschließt.

4. Vorrichtung (1) nach einem der Ansprüche 1 bis 3, **dadurch gekennzeichnet, dass** die Verbindungselemente (21) zwischen den Seitenwänden (3, 4) des Trägers (2) angeordnet sind.

5. Vorrichtung (1) nach Anspruch 4, **dadurch gekennzeichnet, dass** die Verbindungselemente (21) durch rohrförmige Elemente (22) mit vorzugsweise seitlichen flanschförmigen Erweiterungen (23,24) gebildet sind.

6. Vorrichtung (1) nach Anspruch 5, **dadurch gekennzeichnet, dass** die Seitenwände (3,4) des Trägers (2) entsprechend den rohrförmigen Verbindungselementen (21) Öffnungen (26) aufweisen.

7. Vorrichtung (1) nach einem der Ansprüche 1 bis 6, **dadurch gekennzeichnet, dass** die Versteifungsstrukturen und/oder Verbindungselemente (21) und/oder Abdeckplatte (20) mit dem Träger (2) über Klebeverbindungen miteinander verbunden sind.

8. Vorrichtung (1) nach Anspruch 7, **dadurch gekennzeichnet, dass** zusätzlich zu den Klebeverbindungen Verbindungselemente, wie zum Beispiel Nieten oder Schrauben od. dergl., vorgesehen sind.

9. Vorrichtung (1) nach Anspruch 8, **dadurch gekennzeichnet, dass** der Träger (2) und/oder Versteifungsstrukturen und/oder Verbindungselemente (21) und/oder die Abdeckplatte (20) an den Stellen der zusätzlichen Verbindungselemente Löcher (25) aufweisen.

10. Vorrichtung (1) nach einem der Ansprüche 1 bis 9, **dadurch gekennzeichnet, dass** der Träger (2) an Verbindungsstellen mit den Versteifungsstrukturen und/oder Verbindungselementen (21) und/oder der Abdeckplatte (20) Verdickungen (27) aufweist.

11. Vorrichtung (1) nach einem der Ansprüche 1 bis 10, **dadurch gekennzeichnet, dass** der Träger (2) an Verbindungsstellen mit anderen Bauteilen (10,11,12,14,15) Verdickungen (27) aufweist.

12. Vorrichtung (1) nach einem der Ansprüche 1 bis 11, **dadurch gekennzeichnet, dass** diese Vorrichtung (1) auch am Träger (2) angeordnete Befestigungs- oder Adapterelemente (5) od. dgl., insbesondere aus Metall, einschließt.

13. Vorrichtung (1) nach Anspruch 12, **dadurch gekennzeichnet, dass** die Befestigungs- oder Adapterelemente (5) über entsprechende Gegenstücke mit dem Träger (2) verbunden sind.

14. Vorrichtung (1) nach einem der Ansprüche 1 bis 13, **dadurch gekennzeichnet, dass** die Abdeckplatte (20) und/oder allfällige Versteifungsstrukturen aus aus faserverstärktem Kunststoff, insbesondere kohlenstofffaserverstärktem Kunststoff (CFK), hergestellt ist.

15. Vorrichtung (1) nach einem der Ansprüche 1 bis 13, **dadurch gekennzeichnet, dass** der Träger (2) sowie allfällige Versteifungsstrukturen, Verbindungselemente (21) sowie die Abdeckplatte (20) aus Kunststoffmaterial nach der Resin Transfer Moulding (RTM)-Methode hergestellt ist.

16. Vorrichtung (1) nach Anspruch 15, **dadurch gekennzeichnet, dass** der Träger (2) sowie allfällige Versteifungsstrukturen, Verbindungselemente (21) sowie die Abdeckplatte (20) Carbongewebe zur Verstärkung enthalten.

17. Vorrichtung (1) nach Anspruch 16, **dadurch gekennzeichnet, dass** im Carbongewebe reaktive Materialien, wie z.B. Nylon, eingenäht oder eingewebt sind.

## Claims

1. A carrying or guiding device (1), respectively, for landing flaps or the like arranged on an aircraft, comprising a carrier (2) with substantially U-shaped section and substantially parallel side walls (3, 4), **characterized in that** the carrier (2) is made of fiber reinforced plastic, in particular of carbon fiber reinforced plastic (CFRP), and that the device (1) includes a cover plate (20) which is provided substantially at the entire open side of the carrier (2), and that the device (1) includes elements (21) for a connection to other structural elements, wherein said connection elements (21) are made of fiber reinforced plastic, in particular of carbon fiber reinforced plastic (CFRP) .

2. A device (1) according to claim 1, **characterized in that** this device (1) also includes projecting flanges (18, 19) arranged at the ends of the side walls (3, 4) of the carrier (2).

3. A device (1) according to claim 1 or 2, **characterized in that** this device (1) also includes stiffening structures arranged on the side walls (3, 4) of the carrier (2).

4. A device (1) according to any one of claims 1 to 3, **characterized in that** the connecting elements (21) are arranged between the side walls (3, 4) of the carrier (2).

5. A device (1) according to claim 4, **characterized in that** the connecting elements (21) are formed by tubular elements (22) with preferably lateral, flange-like extensions (23, 24).

6. A device (1) according to claim 5, **characterized in that** the side walls (3, 4) of the carrier (2) have openings (26) corresponding to the tubular connecting elements (21).

7. A device (1) according to any one of claims 1 to 6, **characterized in that** the stiffening structures and/or connecting elements (21) and/or the cover plate (20) are connected with the carrier (2) by gluing.

8. A device (1) according to claim 7, **characterized in that** connecting elements, such as, e.g., rivets or screws or the like, are provided in addition to the gluing.

9. A device (1) according to claim 8, **characterized in that** the carrier (2) and/or stiffening structures and/or connecting elements (21) and/or the cover plate (20) have holes (25) at the sites of the additional connecting elements.

10. A device (1) according to any one of claims 1 to 9, **characterized in that** the carrier (2) has thickened portions (27) at the sites of connection to the stiffening structures and/or to the connecting elements (21) and/or to the cover plate (20).

11. A device (1) according to any one of claims 1 to 10, **characterized in that** the carrier (2) has thickened portions (27) at sites of connection to other structural elements (10, 11, 12, 14, 15).

12. A device (1) according to any one of claims 1 to 11, **characterized in that** this device (1) also includes fastening or adapter elements (5) or the like, in particular made of metal, arranged on the carrier (2).

13. A device (1) according to claim 12, **characterized in that** the fastening or adapter elements (5) are connected to the carrier (2) via corresponding counter pieces.

14. A device (1) according to any one of claims 1 to 13, **characterized in that** the cover plate (20) and/or any possible stiffening structures are made of fiber reinforced plastic, in particular of carbon fiber reinforced plastic (CFRP).

15. A device (1) according to any one of claims 1 to 13, **characterized in that** the carrier (2) as well as any possible stiffening structures, connecting elements (21) as well as the cover plate (20) are made of plastics material according to the resin transfer moulding (RTM) method.

16. A device (1) according to claim 15, **characterized in that** the carrier (2) as well as any possible stiffening structures, connecting elements (21) as well as the cover plate (20) contain carbon fabric for reinforcement purposes.

17. A device (1) according to claim 16, **characterized in that** reactive materials, such as, e.g., nylon, are sewed or woven into the carbon fabric.

## Revendications

1. Dispositif de support ou de guidage (1) pour un volet d'atterrissage ou analogue disposé sur un avion, comportant un support (2) pourvu d'un profilé essentiellement en forme de U et des parois latérales (3,4) sensiblement parallèles, **caractérisé en ce que** le support (2) est formé par une matière plastique renforcée par des fibres, notamment une matière plastique renforcée par des fibres de carbone (CFK), et que le dispositif (1) inclut une plaque de recouvrement (20), qui est disposée sur le côté ouvert essentiellement complet du support (2), et que des éléments (21) sont réalisés pour établir la liaison avec d'autres composants, ces éléments de liaison (21) étant constitués par une matière plastique renforcée par des fibres, notamment une matière plastique renforcée par des fibres de carbone (CFK).

2. Dispositif (1) selon la revendication 1, **caractérisé en ce que** ce dispositif (1) inclut également des pattes saillantes (18,19) qui sont disposées sur les extrémités des parois latérales (3,4) du support (2).

3. Dispositif (1) selon la revendication 1 ou 2, **caractérisé en ce que** ce dispositif (1) inclut des structures de renfort disposées sur les parois latérales (3,4) du support (2).

4. Dispositif (1) selon l'une des revendications 1 à 3, **caractérisé en ce que** les éléments de liaison (21) sont disposés entre les parois latérales (3,4) du support (2).

5. Dispositif (1) selon la revendication 4, **caractérisé en ce que** les éléments de liaison (21) sont formés par des éléments de forme tubulaire (22) comportant des élargissements en forme de brides de préférence latérales (23,24).

6. Dispositif (1) selon la revendication 5, **caractérisé en ce que** les parois latérales (3,4) du support (2) possèdent des ouvertures (26), d'une manière correspondant aux éléments de liaison de forme tubulaire (21).

7. Dispositif (1) selon l'une des revendications 1 à 6, **caractérisé en ce que** les structures de renfort et/ou les éléments de liaison (21) et/ou la plaque de recouvrement (20) équipés du support (2) sont reliés entre eux au moyen de liaisons adhésives.

8. Dispositif (1) selon la revendication 7, **caractérisé en ce qu'**en plus des liaisons adhésives, il est prévu des éléments de liaison comme par exemple des rivets ou des vis ou analogues.

9. Dispositif (1) selon la revendication 8, **caractérisé en ce que** le support (2) et/ou les structures de renfort et/ou les éléments de liaison (21) et/ou la plaque de recouvrement (20) possèdent des trous (25) aux emplacements des éléments de liaison supplémentaires.

10. Dispositif (1) selon l'une des revendications 1 à 9, **caractérisé en ce que** le support (2) comporte des épaississements (27) au niveau des emplacements de liaison avec les structures de renfort et/ou les éléments de liaison (21) et/ou la plaque de recouvrement (20).

11. Dispositif (1) selon l'une des revendications 1 à 10, **caractérisé en ce que** le support (2) comporte des épaississements (27) au niveau d'emplacements de liaison avec d'autres composants (10,11,12,14,15).

12. Dispositif (1) selon l'une des revendications 1 à 11, **caractérisé en ce que** ce dispositif (1) inclut également des éléments de fixation ou d'adaptation (5) ou analogues, notamment formés d'un métal, disposés sur le support (2).

13. Dispositif (1) selon la revendication 12, **caractérisé en ce que** les éléments de fixation ou d'adaptation (5) sont reliés au support (2) par l'intermédiaire de pièces antagonistes correspondantes.

14. Dispositif (1) selon l'une des revendications 1 à 13, **caractérisé en ce que** la plaque de recouvrement (20) et/ou d'éventuelles structures de renfort permanentes sont réalisées en une matière plastique renforcée par des fibres, notamment une matière plastique renforcée par des fibres de carbone (CFK).

15. Dispositif (1) selon l'une des revendications 1 à 13, **caractérisé en ce que** le support (2) ainsi que d'éventuelles structures de renfort, des éléments de liaison (21) ainsi que la plaque de recouvrement (20) sont réalisés en une matière plastique conformément au procédé Resin Transfer Moulding (RTM), c'est―à-dire de moulage par transfert de résine.

16. Dispositif (1) selon la revendication 15, **caractérisé en ce que** le support (2) ainsi que d'éventuelles structures de renfort, des éléments de liaison (21) ainsi que la plaque de recouvrement (20) contiennent un tissu en carbone pour le renforcement.

17. Dispositif (1) selon la revendication 16, **caractérisé en ce que** les matériaux réactifs, comme par exemple du Nylon, sont cousus ou insérés par tissage dans le tissu en carbone.
